# EUROPÄISCHE PATENTANMELDUNG

(11) **EP 3 705 725 A1**
(43) Veröffentlichungstag der Anmeldung: **09.09.2020**
(21) Anmeldenummer: 19160778.7
(22) Anmeldetag: 05.03.2019
(51) Int. Cl.: F04D 25/16, F16H 57/028, F16H 57/04

(54) **ANORDNUNG MIT GETRIEBEKOMPONENTEN**

(71) Anmelder: Siemens Aktiengesellschaft, 80333 München (DE)
(72) Erfinder: Nissler, Joachim, 47137 Duisburg (DE); Schulz, Hans, 46049 Oberhausen (DE)

(57) **Zusammenfassung**

Die Erfindung betrifft eine Anordnung (ARM) eines Getriebeverdichters (GTC) umfassend:
- Lager (BEA) zur drehbaren Lagerung von Wellen (SHT),
- Getriebekomponenten (GCP) einschließlich der Zahnräder (CHT) zur kinetischen Kopplung der Wellen (SHT),
- einen Behälter (TNK) zur Bereitstellung eines Ölbades (OLB) für die Getriebekomponenten (GCP).
Für eine bessere Wirtschaftlichkeit bei gleichzeitig besserer Funktion wird vorgeschlagen, dass
- eine Rahmenkonstruktion (FCE) der Anordnung (ARM) vorgesehen ist, an der die Lager (BEA) angebracht und abgestützt sind.

## Beschreibung

Die Erfindung betrifft eine Anordnung umfassend:
- Lager zur drehbaren Lagerung von Wellen,
- Getriebekomponenten einschließlich der Zahnräder zur kinetischen Kopplung der Wellen,
- einen Behälter zur Bereitstellung eines Ölbades für die Getriebekomponenten.

Ein Getriebegehäuse ist eine Maschinen-Komponente, die insbesondere für Getriebeverdichter notwendig ist.

Anordnungen mit einem Getriebeverdichter bzw. Getriebeverdichter sind bereits aus den DE102010020145-A1, DE102009015862-A1, DE102014225136-A1, DE102015200439-A1, DE102015203287-A1, EP 3 299 630 A1 bekannt.

Ein Getriebeverdichter einer Anordnung im Sinne der Erfindung umfasst in der Regel:
- ein Getriebegehäuse,
- eine Antriebswelle,
- mehrere Radialfluidenergiemaschinen,
- ein Getriebe in dem Getriebegehäuse, das mehrere Ritzelwellen aufweist, wobei die mehreren Radialfluidenergiemaschinen von den mehreren Ritzelwellen angetrieben werden, wobei die mehreren Radialfluidenergiemaschinen außen an dem Getriebegehäuse angeordnet sind.

Das Getriebegehäuse eines Getriebes übernimmt in der Regel mehrere Funktionen:
- es positioniert die Wellen des Getriebes zueinander,
- es nimmt die aus dem Getriebe entstehenden Kräfte auf,
- es dient der Kapselung des Getriebes gegenüber der Umgebung,
- es dient der Sammlung und Bevorratung des Getriebeöls,
- es leitet zumindest zum Teil die Abwärme des Getriebes an die Umgebung weiter.

Darüber hinaus übernimmt das Getriebegehäuse bei Getriebeturboverdichtern weitere Funktionen:
- es positioniert die statischen Bauteile der Verdichter, insbesondere die Verdichtergehäuse, die häufig auch als Spiralgehäuse bezeichnet werden,
- es nimmt die Kräfte, die durch das Gewicht der Verdichtergehäuse bzw. Spiralgehäuse entstehen, auf.

Diese Gewichtskräfte verformen das Getriebegehäuse beträchtlich, so dass der Verformung entgegengewirkt werden muss.

Grundsätzlich nehmen herkömmlich Getriebegehäuse Kräfte aus dem Betrieb und der Gewichtskraft der an dem Gehäuse angebrachten Bauteile auf. Die Erfindung sieht vor, diese Kräfte mittels der Rahmenkonstruktion von dem eigentlichen Gehäuse abzuleiten. Dies führt zu bedeutenden Veränderungen der Anforderungen an das Gehäuse bei weitestgehend allen Anordnungen der Erfindungsgemäßen Art. Hierbei stellt der Getriebeverdichter eine besonders interessante Anwendung dar, weil dort die Kräfte aus dem Eigengewicht und dem Betrieb besonders belastend sind.

Herkömmlich wurde mittels zunehmend größerer Materialstärken der Komponenten des Getriebegehäuses der Verformung entgegengewirkt.

Der durch das bisherige Vorgehen vergrößerte Materialbedarf und die zusätzliche Fertigungsarbeit führen zu Kostensteigerungen, die das Produkt zunehmend unwirtschaftlicher machen. Weiterhin stellt sich die zunehmende Größe der Anordnung als Problem dar beim Transport und der Aufstellung der Maschine.

Zur Lösung der beschriebenen Probleme sieht die Erfindung eine Weiterbildung der eingangs definierten Anordnung mittels der im kennzeichnenden Teil des Anspruchs 1 definierten zusätzlichen Merkmale vor. Die jeweils rückbezogenen Unteransprüche beinhalten vorteilhafte Weiterbildungen der Erfindung.

Im Gegensatz zur herkömmlichen integralen Bauweise von Getriebekästen verwendet die Erfindung eine Differentialbauweise. Diese Differentialbauweise folgt der Idee der Trennung des bisherigen Getriebegehäuses in zwei verschiedene Bauteile und Aufteilung der Funktionen:
- Wellen positionieren, Getriebekräfte aufnehmen und Spiralgewichte aufnehmen einerseits und
- Kapselung des Getriebes gegenüber der Umgebung sowie Sammlung und Bevorratung des Getriebeöls andererseits
auf diese beiden Bauteile, nämlich die Rahmenkonstruktion und den Behälter. Die erfindungsgemäße Rahmenkonstruktion, insbesondere Stahlrahmenkonstruktion, übernimmt die Positionierung der Wellen, die Aufnahme der Getriebekräfte und Spiralgewichte. Der bisher schon bekannte Behälter übernimmt die Kapselung des Getriebes gegenüber der Umgebung sowie Sammlung und Bevorratung des Getriebeöls.

Nach der Erfindung kann dieser Behälter befreit von der in der herkömmlichen Auslegung vorgesehenen Funktion, die Gewichtskräfte aus den Verdichtern auszunehmen neben den dynamischen Kräften als grundlegend anderes Bauteil ausgeführt werden, so dass lediglich die Funktion der Kapselung des Getriebes erfüllt ist. Demensprechend bedarf es nur noch verhältnismäßig geringer Wandstärken für den Getriebebehälter, die ausreichend sind, dem Öldruck mechanisch Stand zu halten und ggf. sonstige Anforderungen - zum Beispiel chemische Beständigkeit - zu erfüllen. Hierzu bedarf es möglicherweise keines metallischen Behälters, so dass ein Kunststoffbehälter schon ausreichend sein kann. Infolge der erfindungsgemäßen Funktionstrennung erweitern sich die konstruktiven Gestaltungsmöglichkeiten einerseits für die Rahmenkonstruktion und andererseits für den Behälter. Die Rahmenkonstruktion kann - wie im Stand der Technik für die Getriebekastenkonstruktion üblich - weiterhin mit Vollmaterial ausgeführt werden. Andererseits ist es aus Gründen des Gewichtes und der Steifigkeit sowie aus Kostengründen vorteilhaft, die Rahmenkonstruktion zum Teil zumindest aus Hohlprofilen herzustellen. Statt der Hohlprofile können auch Profilträger, insbesondere Stahlträger benutzt werden. Die verbindenden Schweißnähte können entsprechend, verglichen mit der herkömmlichen Konstruktion kleiner gewählt werden, da die Schweißnahtgröße entscheidend von den zu verbindenden Querschnitten abhängt. War es in der Vergangenheit üblich, Brammen aus Stahl für die Herstellung der Getriebekästen zu verwenden, können erfindungsgemäß für die Rahmenkonstruktion vorteilhaft Träger oder Hohlprofile verwendet werden mit sehr viel geringeren Schweißnähten. Beispielsweise können einlagige Kehlnähte bei der Herstellung der Rahmenkonstruktion nach der Erfindung zur Verbindung der einzelnen Konstruktionselemente verwendet werden, so dass Schweißmaterial und Arbeitszeit eingespart werden.
Die Brammen werden herkömmlich verwendet, um die kombinierte Aufgabe des Kräfteabfangens und der Ölbevorratung zu lösen.

Besonders vorteilhaft ist auch die Einsparung von Gewicht, so dass Kranlasten am Aufstellungsort geringer dimensioniert werden können. Eine weitere Kostenersparnis bei der erfindungsgemäßen Anordnung durch die Möglichkeit der Verwendung von Normprofilen für die Stahlrahmenkonstruktion gegeben.

Eine vorteilhafte Weiterbildung der Erfindung sieht vor, dass ein Fundament der Anordnung unmittelbar an der Rahmenkonstruktion befestigt ist und die Rahmenkonstruktion Kräfte in das Fundament ableitet. Hierbei ist die unmittelbare Befestigung derart zu verstehen, dass die Rahmenkonstruktion den Hauptteil der aus dem Gewicht der Anordnung und den dynamischen Kräften bei Betrieb der Anordnung resultierenden Kräfte in das Fundament einleitet. An der Rahmenkonstruktion nach der Erfindung sind zumindest ein Verdichtergehäuse, bevorzugt alle Verdichtergehäuse der Anordnung befestigt und abgestützt.

Besonders zweckmäßig sind die Lager derart an der Rahmenkonstruktion angebracht und abgestützt, dass Gewichtskräfte und mechanische Antriebskräfte aus der Rotation der Wellen und der Getriebekinematik mittels der Rahmenkonstruktion in das Fundament eingeleitet werden.

Optional kann das Fundament als Fundament-Rahmenkonstruktion ausgeführt sein und die Rahmenkonstruktion kann sich in die Fundament-Rahmenkonstruktion hinein fortsetzen. Andere Maschinen oder Maschinenkomponenten können auf dem Fundament oder der Fundament-Rahmenkonstruktion angeordnet sein.

Besonders zweckmäßig ist an dem Behälter ein Kühlaggregat zur Ölkühlung angebracht.

Eine vorteilhafte Weiterbildung der Erfindung sieht vor, dass Rohrleitungen an der Anordnung die Lager mit dem Behälter zum Zwecke der Ölversorgung und Ölentsorgung verbinden.

Besonders zweckmäßig können die Rohrleitungen der Anordnung die Lager und/oder den Behälter zum Zwecke der Ölversorgung und Ölentsorgung miteinander und/oder mit einem Ölaggregat verbinden.

Da der Behälter weitestgehend fokussiert auf die Aufgabe der Kapselung des Getriebes ausgelegt werden kann, kann die Innenseite des Behälters eine glatte Oberfläche ohne Störstellen aufweisen, so dass das Schmiermittel in dem Behälter störungsfrei zirkulieren kann und etwaige Ventilationsverluste durch die Ölströmung vermieden werden können.

Im Folgenden ist die Erfindung anhand eines speziellen Ausführungsbeispiels unter Bezugnahme auf Zeichnungen näher beschrieben. Es zeigen:
- Figur 1: eine seitliche Ansicht auf eine erfindungsgemäße Anordnung und
- Figur 2: eine stirnseitige Ansicht einer erfindungsgemäßen Anordnung.

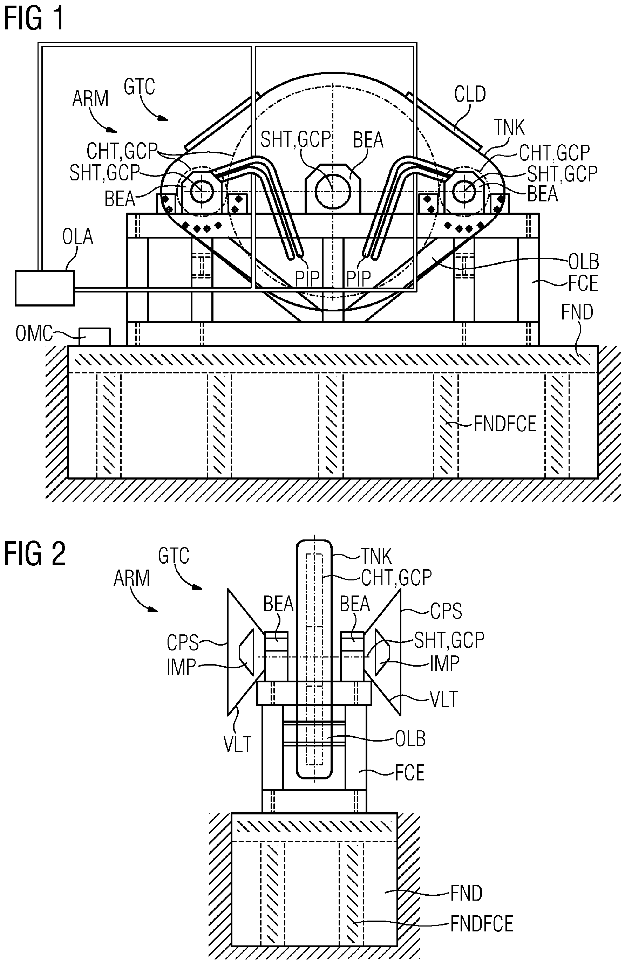

Die Figuren 1 und 2 zeigen schematisch eine erfindungsgemäße Anordnung ARM eines Getriebeverdichters GTC, umfassend: Lager BEA zur drehbaren Lagerung von Welle SHT, Getriebekomponenten GCP einschließlich der Zahnräder CHT zur kinetischen Kopplung der Wellen SHT, einen Behälter TNK zur Bereitstellung eines Ölbades OLB für die Getriebekomponenten GCP. Nach der Erfindung ist eine Rahmenkonstruktion FCE der Anordnung ARM vorgesehen, an der die Lager BEA angebracht und abgestützt sind. Unterhalb der Rahmenkonstruktion FCE befindet sich ein Fundament FND, an dem die Rahmenkonstruktion FCE derart unmittelbar befestigt und abgestützt ist, so dass Gewichtskräfte aus einzelnen Verdichtern CPS (sind schematisch nur in der Figur 2 eingezeichnet) des Getriebeverdichters GTC sowie dynamische Betriebskräfte aus der Rotation der Wellen SHT mit den auf den Wellen angebrachten Laufrädern IMP der Verdichter CPS zum größten Teil in das Fundament FND eingeleitet werden können. Die Gehäuse bzw. Verdichtergehäuse VLT der Verdichter CPS sind an der Rahmenkonstruktion FCE befestigt und abgestützt. Die Lager BEA sind derart an der Rahmenkonstruktion FCE angebracht, dass Gewichtskräfte und dynamische Betriebskräfte aus der Rotation der Wellen SHT und der Getriebekinematik mittels der Rahmenkonstruktion FCE in das Fundament FND mittels der Rahmenkonstruktion eingeleitet werden.

Optional kann das Fundament FND als Fundament-Rahmenkonstruktion FNDFCE ausgeführt sein (gestrichelte Darstellung) und die Rahmenkonstruktion FCE kann sich in die Fundament-Rahmenkonstruktion FNDFCE hinein fortsetzen. Andere Maschinen oder Maschinenkomponenten OMC können auf dem Fundament FND oder der Fundament-Rahmenkonstruktion FNDFCE angeordnet sein, so dass insbesondere die Fundament-Rahmenkonstruktion FNDFCE für mehrere Anordnungen als Fundament dient. Diese anderen Maschinen oder Maschinenkomponenten OMC sind in der Figur 1 nur symbolisch angeordnet und sind in ähnlicher Größenordnung ausgebildet, wie die erfindungsgemäße Anordnung.

Der Behälter TNK weist ein Kühlaggregat CLD zur Kühlung des Schmiermittels bzw. des Ölbades auf. Zwischen den Lagern BEA und dem Behälter TNK sind Rohrleistungen PIP (schematisch nur in Figur 1 eingezeichnet) vorgesehen, zum Zwecke der Ölversorgung und Ölentsorgung der Lager BEA.

Rohrleitungen PIP der Anordnung ARM verbinden die Lager BEA und/oder den Behälter TNK zum Zwecke der Ölversorgung und Ölentsorgung miteinander und/oder mit einem Ölaggregat OLA verbinden.

Zweckmäßig ist der Behälter TNK aus Kunststoff hergestellt. Die Rahmenkonstruktion FCE besteht im Einzelnen aus Stahlträgern, die mittels Kehlnähten verbunden sind.
- Der Stahlrahmen wird soweit ergänzt, dass dieser die Kräfte die durch das Gewicht der Spiralgehäuse entstehen aufnimmt.) Stahlrahmen bevorzugt aus Normprofilen. Verschiedene Fügearten wie z.B. Schweißen oder Schrauben (Schraubverbindungen können zusätzlich geklebt werden, um eine bessere Schwingungsableitung zu erhalten) sind möglich.
- Auslagerund der Funktion Wellen Tragen/Lagern/Positionierten in einzelne Stehlager die auf der
- Stahlrahmenkonstruktion verankert sind.
- Auslagerung der Funktion Öl Sammeln/Bevorraten/Kapselung des Getriebes/Abwärme abführen in ein
- Innengehäuse.

## Patentansprüche

1. Anordnung (ARM) umfassend:
- Lager (BEA) zur drehbaren Lagerung von Wellen (SHT), die mittels Zahnrädern (CHT) kinetisch miteinander gekoppelt sind,
- Getriebekomponenten (GCP) einschließlich der Zahnräder (CHT) zur kinetischen Kopplung der Wellen (SHT),
- einen Behälter (TNK) zur Bereitstellung eines Ölbades (OLB) für die Getriebekomponenten (GCP),
**dadurch gekennzeichnet, dass**
- eine Rahmenkonstruktion (FCE) der Anordnung (ARM) vorgesehen ist, an der die Lager (BEA) angebracht und abgestützt sind.

2. Anordnung (ARM) nach Anspruch 1,
wobei die an der Rahmenkonstruktion (FCE) angebrachten Lager (BEA) nicht direkt an dem Behälter (TNK) angebracht oder abgestützt sind.

3. Anordnung (ARM) nach Anspruch 1,
umfassend ein Fundament (FND), an dem die Rahmenkonstruktion (FCE) unmittelbar befestigt und abgestützt ist.

4. Anordnung (ARM) nach mindestens dem vorhergehenden Anspruch 3,
wobei das Fundament (FND) als Rahmenkonstruktion (FNDFCE) ausgeführt ist und die Rahmenkonstruktion (FCE) sich in das Fundament (FND) hinein fortsetzt.

5. Anordnung (ARM) nach mindestens den vorhergehenden Ansprüchen 3 oder 4,
wobei die Lager (BEA) derart an der Rahmenkonstruktion (FCE) angebracht und abgestützt sind, dass Gewichtskräfte und dynamische Betriebskräfte aus der Rotation der Wellen (SHT) und der Getriebekinematik mittels der Rahmenkonstruktion (FCE) in das Fundament (FND) eingeleitet werden.

6. Anordnung (ARM) nach mindestens einem der vorhergehenden Ansprüche 1 bis 5,
wobei Rohrleitungen (PIP) der Anordnung (ARM) die Lager (BEA) und/oder den Behälter (TNK) zum Zwecke der Ölversorgung und Ölentsorgung miteinander und/oder mit einem Ölaggregat (OLA) verbinden.

7. Anordnung (ARM) nach mindestens einem der vorhergehenden Ansprüche 1 bis 6,
wobei der Behälter (TNK) aus Kunststoff besteht.

8. Anordnung (ARM) nach mindestens einem der vorhergehenden Ansprüche 1 bis 6,
wobei die Anordnung (ARM) Bestandteil eines Getriebeverdichters (GTC) ist und mindestens ein Verdichtergehäuse (VLT) umfasst, das an der Rahmenkonstruktion (FCE) befestigt und abgestützt ist.

9. Anordnung (ARM) nach mindestens einem der vorhergehenden Ansprüche 1 bis 4,
wobei an dem Behälter (TNK) ein Kühlaggregat (CLD) zur Ölkühlung angebracht ist.
